# EUROPÄISCHE PATENTSCHRIFT

(11) **EP 0 736 695 B1**
(45) Veröffentlichungstag und Bekanntmachung des Hinweises auf die Patenterteilung: **20.10.1999**
(21) Anmeldenummer: 96810114.7
(22) Anmeldetag: 01.03.1996
(51) Int. Cl.: F16B 37/12, F16B 13/12

(54) **Spreizdübel**
Expansion dowell
Cheville d'expansion

(30) Priorität: 03.04.1995 DE 19512415
(43) Veröffentlichungstag der Anmeldung: 09.10.1996
(73) Patentinhaber: HILTI Aktiengesellschaft, 9494 Schaan (LI)
(72) Erfinder: Mayr, Franz-Paul, 86949 Hechenwang (DE)
(74) Vertreter: Wildi, Roland

(56) Entgegenhaltungen:
- EP-A- 0 008 085
- WO-A-86/06880
- DE-C- 841 949
- FR-A- 325 234

## Beschreibung

Die Erfindung betrifft einen Spreizdübel mit einem zylindrischen Dübelkörper, der einen Kragen und einen Spreizbereich mit wenigstens einem axialen Schlitz bzw. einer Brechnut aufweist, und bei dem der Dübelkörper mit einer etwa zentrischen Durchgangsbohrung versehen ist, die zur Aufnahme eines Spreizelements ausgebildet ist.

Spreizdübel der gattungsgemässen Art sind ausserordentlich stark verbreitet. Sie finden in Gestein, Beton, Mauerwerk und dergleichen Aufnahmematerialien Anwendung. Sie werden aber auch bei weniger festen Aufnahmematerialien, wie beispielsweise Holz, eingesetzt. Der Kragen am setzrichtungsseitigen hinteren Ende des Spreizdübels gewährleistet dabei eine exakte Setztiefe, unabhängig von der Tiefe des Bohrlochs. Als Materialien für den Spreizdübel werden vielfach Bleche verwendet, die billig sind und eine einfache Bearbeitung erlauben. Aus der DE-C-841 949 ist ein Blechdübel bekannt, der aus einem zylindrischen Dübelkörper mit einem Kragen besteht. Der Dübelkörper weist eine Durchgangsbohrung auf und ist entlang seiner Längsseite geschlitzt ausgebildet. Der beschriebene Spreizdübel soll ohne zusätzliche Spreizelemente verspreizbar sein, um einen Zapfen, beispielsweise den Zapfen eines Türgriffs, ohne die Verwendung von Schrauben, Bolzen oder Nieten darin zuverlässig zu befestigen. Dazu weist der Dübelkörper an seinem setzrichtungsseitig vorderen Ende eine Querschnittsverengung der Durchgangsbohrung auf, die beim Hineintreiben eines Zapfens in die Durchgangsbohrung aufgeweitet wird und den vorderen Rand des Dübelkörpers in die Wandung des Bohrlochs drückt. Der eingetriebene Zapfen des Türgriffs wirkt in diesem Fall als Spreizelement. Der Spreizdübel soll auf diese Weise selbstsperrend wirken, so dass zwar ein Hineintreiben des Zapfens möglich sein soll, jedoch ein Herausziehen des Spreizdübels verhindert wird.

Während diese Art der Verankerung eines Spreizdübels in sehr weichem Aufnahmematerial zu ausreichenden Haltewerten, beispielsweise für Türgriffe und dgl., führen mag, ist der beschriebene Spreizdübel für festeres Aufnahmematerial ungeeignet. Bei festerem Aufnahmematerial, beispielsweise Gestein, Beton oder Mauerwerk wird der Rand nur geringfügig oder gar nicht in die Wandung des Bohrlochs gedrückt. Vielmehr wird der Bereich der Querschnittsverengung einfach nach aussen gepresst und plastisch verformt. Ausreichende Haltewerte können auf diese Weise nicht erzielt werden. Aber auch in weniger festem Aufnahmematerial können mit dieser Art von Spreizdübeln keine Befestigungen erstellt werden, die höheren Anforderungen an die Haltewerte genügen.

Es besteht daher der Wunsch nach einem Spreizdübel, der unter anderem auch aus Blech herstellbar ist und für den Einsatz in weniger festem Aufnahmematerial, aber auch für feste Untergründe, wie beispielsweise Gestein, Beton, Mauerwerk und dergleichen geeignet ist. Der Spreizdübel soll in all den unterschiedlichen Aufnahmematerialien ausreichende Haltewerte gewährleisten. Darüber hinaus soll der Spreizdübel sowohl für direkte Befestigungen von Elementen ohne zusätzliche Schrauben, Bolzen und dergleichen mehr geeignet sein, als auch konventionelle Befestigungen mittels Verschraubungen erlauben. Der Spreizdübel soll ohne zusätzliche spezielle Setzwerkzeuge verspreizbar sein.

Die Lösung dieser Aufgaben besteht in einem Spreizdübel, der die im kennzeichnenden Teil des Patentanspruchs 1 angeführten Merkmale aufweist. Insbesondere wird durch die Erfindung ein Spreizdübel geschaffen, der einen zylindrischen Dübelkörper mit einem Kragen und einem Spreizbereich umfasst, der wenigstens einen axialen Schlitz bzw. eine Brechnut aufweist. Der Dübelkörper ist mit einer etwa zentrischen Durchgangsbohrung versehen, die zur Aufnahme eines Spreizelements ausgebildet ist. An ihrem in Setzrichtung vorderen Bereich ist die Durchgangsbohrung mit einem Innengewinde ausgestattet. Das Spreizelement ist als Hülse ausgebildet und findet im der Setzrichtung abgewandten hinteren Bereich der Durchgangsbohrung Aufnahme, der den Spreizbereich des Dübelkörpers bildet.

Durch die erfindungsgemässe Ausbildung des Spreizdübels ist dieser universell einsetzbar. Der Spreizbereich mit Schlitz bzw. Brechnut ist im der Setzrichtung abgewandten hinteren Bereich des Dübelkörpers angeordnet. Das in diesem Bereich in die zentrale Bohrung eintreibbare Spreizelement ist als Hülse ausgebildet. Das Eintreiben der Hülse erfordert kein zusätzliches, spezielles Setzwerkzeug, sie kann einfach mit einem Hammer eingeschlagen werden. Dabei ist durch den am der Setzrichtung abgewandten Ende des Dübelkörpers vorgesehenen Kragen ein bohrlochtiefenunabhängiges und bündiges Verspreizen des Spreizdübels sichergestellt. Die Verspreizung erfolgt durch Flächenpressung des den Spreizbereich bildenden hinteren Bereichs des Dübelkörpers im Bohrloch. Der in Setzrichtung vordere Bereich der Durchgangsbohrung ist mit einem Innengewinde ausgestattet. Zapfen können direkt in die Hülse eingetrieben werden und auf diese Weise beispielsweise Türgriffe direkt befestigt werden. Die Ausstattung des vorderen Bereichs der Durchgangsbohrung mit einem Innengewinde als Angriffsmittel erlaubt auch Schraubbefestigungen. Die Schraubenlänge ist dabei allein durch die Höhe des zu befestigenden Elements und die Tiefe des Bohrlochs festgelegt.

In einer vorteilhaften Ausführungsvariante des erfindungsgemässen Spreizdübels erstreckt sich der Spreizbereich des Dübelkörpers etwa über ½ bis etwa ¾ der Gesamtlänge des Dübelkörpers. Auf diese Weise ist ein ausreichend langer Spreizbereich geschaffen, der zusammen mit einer Hülse ausreichender Länge als Spreizelement in allen Aufnahmematerialien für ausreichende Haltewerte sorgt.

Bevorzugt ist die Länge der Hülse derart bemessen, dass sie im eingesetzten Zustand ohne Überstand im hinteren Bereich der Durchgangsbohrung angeordnet ist. Die Hülse schliesst in diesem Fall bündig mit dem Kragen des Dübelkörpers ab. Die zu befestigenden Elemente schliessen auf diese Weise gleichfalls bündig an den Dübelkörper an.

In einer vorteilhaften Ausführungsvariante der Erfindung weist der mit dem Innengewinde versehene vordere Bereich der Durchgangsbohrung einen geringeren Durchmesser auf als der hintere Bereich. Im Falle einer direkten Befestigung eines Zapfens in der Hülse läuft die Hülse, falls sie zusammen mit dem Zapfen im Dübelkörper vorgetrieben wird, am der Setzrichtung abgewandten Ende des vorderen Bereichs an und ist dort axial fixiert. Dadurch wird beim weiteren Eintreiben nur mehr der Zapfen vorgeschoben. Es ist vorteilhaft, wenn die Spreizhülse einen Innendurchmesser aufweist, der grösser oder gleich dem Durchmesser des vorderen Bereichs der Durchgangsbohrung ist. Auf diese Weise ist sichergestellt, dass das Innengewinde im vorderen Bereich der Durchgangsbohrung für eine Schraube zugängig ist.

Der erfindungsgemässe Spreizdübel kann aus Kunststoff oder aus Metall sein. Vorzugsweise sind der Dübelkörper und die Hülse aus leicht zu bearbeitendem Blech.

Im folgenden wird die Erfindung unter Bezugnahme auf ein in den Zeichnungen schematisch dargestelltes Ausführungsbeispiel näher erläutert. Es zeigen:
- Fig. 1: einen Axialschnitt eines Ausführungsbeispiels des erfindungsgemässen Spreizdübels in gesetztem Zustand und
- Fig. 2: den Spreizdübel aus Fig. 1 in explodiertem Axialschnitt.

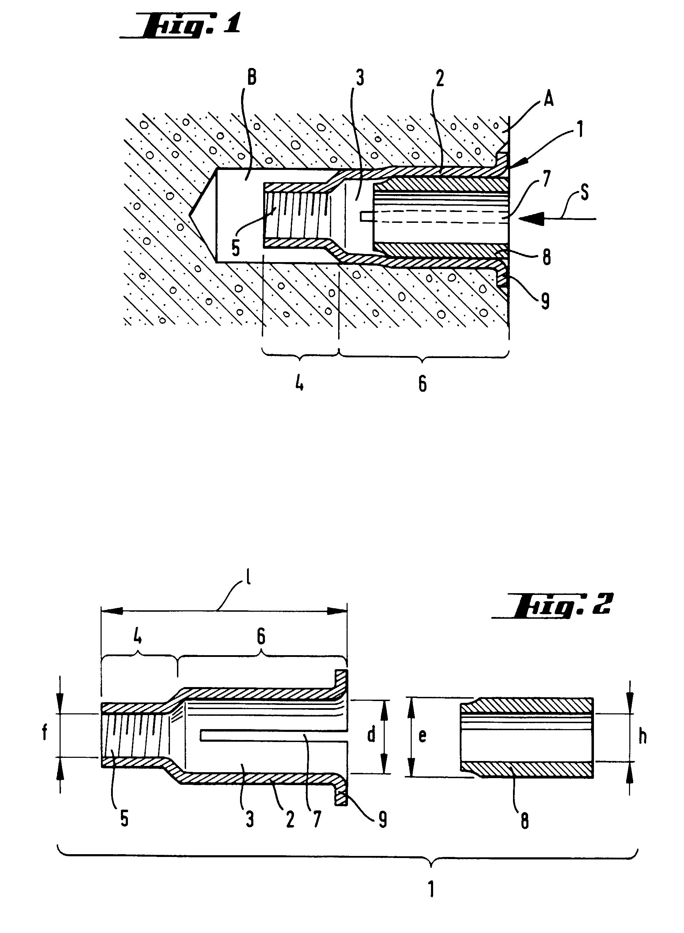

Ein Ausführungsbeispiel des erfindungsgemässen Spreizdübels ist in Fig. 1 und 2 jeweils gesamthaft mit dem Bezugszeichen 1 versehen. Der Spreizdübel 1 umfasst einen im wesentlichen zylindrischen Dübelkörper 2 mit einer zentralen Durchgangsbohrung 3. Der Dübelkörper 2 weist einen in Setzrichtung S vorderen Bereich 4 und einen der Setzrichtung S abgewandten hinteren Bereich 6 auf. Der hintere Bereich 6 des Dübelkörpers 2 bildet den Spreizbereich und weist wenigstens einen sich axial erstreckenden Schlitz 7 auf. Anstelle eines Schlitzes kann auch eine Brechnut vorgesehen sein. Am der Setzrichtung S abgewandten Ende des Dübelkörpers 2 ist ein Kragen 9 ausgebildet, der beim Setzen des Spreizdübels in ein Bohrloch B in einem Aufnahmematerial A, beispielsweise Beton, als Anschlag dient.

Die zentrale Bohrung 3 ist im hinteren Bereich des Dübelkörpers 2 zur Aufnahme eines Spreizelements ausgebildet, welches als Hülse 8 ausgebildet ist. Der Aussendurchmesser e der Hülse 8 ist um etwa 0,5 mm bis etwa 1,5 mm, jeweils ± 0,2 mm Fertigungstoleranz, grösser als der Innendurchmesser d des den Spreizbereich bildenden hinteren Bereichs 6 des Dübelkörpers 2. Der Spreizbereich 6 erstreckt sich etwa über ½ bis etwa ¾ der Gesamtlänge I des Dübelkörpers 2. Beim Einschlagen der Hülse 8 in die zentrale Durchgangsbohrung 3 weitet diese den Spreizbereich 6 auf, was durch den Längsschlitz 7 ermöglicht wird. Die Länge der Hülse 8 ist dabei derart bemessen, dass sie im eingeschlagenen Zustand ohne Überstand bündig mit dem Kragen 9 des Dübelkörpers 2 abschliesst.

Der vordere Bereich 4 der Durchgangsbohrung 3 weist einen gegenüber dem Innendurchmesser d des hinteren Bereichs 6 geringeren Durchmesser f auf und ist mit einem Innengewinde 6 als Angriffsmittel für eine Befestigungsschraube (nicht dargestellt) ausgestattet. Der Innendurchmesser h der Hülse 8 ist grösser als oder maximal gleich dem Durchmesser f des vorderen Bereichs 4 der Durchgangsbohrung 3.

Im dargestellten Ausführungsbeispiel verjüngen sich die Aussenkonturen des Dübelkörpers 2 bzw. der Hülse 8 an den in Setzrichtung S jeweils vorderen Bereichen. Es versteht sich, dass dies nur eine beispielsweise Ausführungsvariante ist; selbstverständlich können sowohl der Dübelkörper 2 als auch die Hülse 8 zylindrische Aussenkonturen mit über ihre gesamte Längserstreckung konstanten Aussendurchmessem aufweisen.

Als Materialien für den erfindungsgemässen Spreizdübel 1 können Kunststoffe oder Metall eingesetzt werden. Vorzugsweise werden der Dübelkörper 2 und die Hülse 8 aus leicht bearbeitbarem Blech hersgestellt.

Der erfindungsgemässe Spreizdübel ist bei allen Aufnahmematerialien einsetzbar. Der Spreizbereich mit Schlitz bzw. Brechnut ist im der Setzrichtung abgewandten hinteren Bereich des Dübelkörpers angeordnet. Das in diesem Bereich in die zentrale Bohrung eintreibbare Spreizelement ist als Hülse ausgebildet. Das Eintreiben der Hülse erfordert kein zusätzliches, spezielles Setzwerkzeug, sie kann einfach mit einem Hammer eingeschlagen werden. Dabei ist durch den am der Setzrichtung abgewandten Ende des Dübelkörpers vorgesehenen Kragen ein bohrlochtiefenunabhängiges und bündiges Verspreizen des Spreizdübels sichergestellt. Die Verspreizung erfolgt durch Flächenpressung des den Spreizbereich bildenden hinteren Bereichs des Dübelkörpers im Bohrloch. Der in Setzrichtung vordere Bereich der Durchgangsbohrung im Dübelkörper ist mit einem Innengewinde ausgestattet. Zapfen können direkt in die Hülse eingetrieben werden und auf diese Weise beispielsweise Türgriffe direkt befestigt werden. Die Ausstattung des vorderen Bereichs der Durchgangsbohrung mit einem Innengewinde als Angriffsmittel erlaubt auch Schraubbefestigungen. Die Schraubenlänge ist dabei allein durch die Höhe des zu befestigenden Elements und die Tiefe des Bohrlochs festgelegt.

## Patentansprüche

1. Spreizdübel mit einem zylindrischen Dübelkörper (2), der einen Kragen (9) und einen Spreizbereich mit wenigstens einem axialen Schlitz (7) bzw. einer Brechnut aufweist, und bei dem der Dübelkörper mit einer etwa zentrischen Durchgangsbohrung (3) versehen ist, die zur Aufnahme eines Spreizelements (8) ausgebildet ist, **dadurch gekennzeichnet**, dass die Durchgangsbohrung (3) in dem in Setzrichtung (S) vorderen Bereich (4) mit einem Innengewinde (5) ausgestattet ist und dass das Spreizelement (8) als Hülse ausgebildet ist und in dem der Setzrichtung (S) abgewandten hinteren Bereich (6) der Durchgangsbohrung (3) Aufnahme findet, welcher den Spreizbereich bildet.

2. Vorrichtung nach Anspruch 1, dadurch gekennzeichnet, dass der Spreizbereich (6) des Dübelkörpers (2) sich etwa über ½ bis etwa ¾ der Gesamtlänge (I) des Dübelkörpers (2) erstreckt.

3. Vorrichtung nach Anspruch 1 oder 2, dadurch gekennzeichnet, dass die Länge der Hülse (8) derart bemessen ist, dass sie im eingesetzten Zustand ohne Überstand im hinteren Bereich (6) der Durchgangsbohrung (3) angeordnet ist.

4. Vorrichtung nach einem der vorangehenden Ansprüche, dadurch gekennzeichnet, dass der mit dem Innengewinde (5) versehene vordere Bereich (4) der Durchgangsbohrung (3) einen geringeren Durchmesser (f) aufweist als der hintere Bereich (6) und dass die Hülse (8) einen Innendurchmesser (h) aufweist, der grösser oder gleich dem Durchmesser (f) des vorderen Bereichs (4) der Durchgangsbohrung (3) ist.

5. Vorrichtung nach einem der vorangehenden Ansprüche, dadurch gekennzeichnet, dass der Dübelkörper (2) und die Spreizhülse (8) aus Metall sind.

## Claims

1. Expansion anchor with a cylindrical anchor body (2) which has a collar (9) and an expansion zone with at least one axial slit (7), or shearing slot, and whereon the anchor body is provided with a substantially centrical through-hole (3) which is configured to receive an expansion element (8), characterised in that in the zone (4) situated to the front in the placement direction (S) the through-hole (3) is internally threaded (5), and that the expansion element (8) is in the form of a sleeve and locates in the through-hole's (3) rear zone (6) which faces away from the placement direction (S), forming the expansion zone.

2. Device according to claim 1, characterised in that the expansion zone (6) of the anchor body (2) extends over roughly 1/2 to roughly 3/4 of the overall length (1) of the anchor body (2).

3. Device according to claim 1 or 2, characterised in that the length of the sleeve (8) is of a dimension such that once it has been set in position it occupies the rear zone (6) of the through-hole (3) without any overhang.

4. Device according to any of the preceding claims, characterised in that the internally threaded (5) front zone (4) of the through-hole (3) is smaller in diameter (fj than the rear zone (6) and that the sleeve (8) has an internal diameter (h) that is larger than or equal to the diameter (f) of the front zone (4) of the through-hole (3).

5. Device according to any of the preceding claims, characterised in that the anchor body (2) and the expansion sleeve (8) are made out of metal.

## Revendications

1. Cheville expansible qui comprend un corps de cheville cylindrique (2) comportant un collet (9) et une zone d'expansion pourvue d'au moins une fente axiale (7) ou d'une gorge de rupture, et dans laquelle le corps de cheville est pourvu d'un trou débouchant sensiblement centré (3) conçu pour loger un élément d'expansion (8), caractérisée en ce que le trou débouchant (3) comporte un taraudage (5) dans la zone (4) située à l'avant dans le sens d'enfoncement (S), et en ce que l'élément d'expansion (8) est conçu sous la forme d'un manchon et se loge dans la zone arrière (6) du trou débouchant (3), laquelle est située à l'opposé du sens d'enfoncement (S) et forme la zone d'expansion.

2. Dispositif selon la revendication 1, caractérisé en ce que la zone d'expansion (6) du corps de cheville (2) s'étend sur environ la moitié à environ trois quarts de la longueur totale (1) du corps de cheville (2).

3. Dispositif selon la revendication 1 ou 2, caractérisé en ce que la longueur du manchon (8) est calculée pour être disposée, en position insérée, sans débordement dans la zone arrière (6) du trou débouchant (3).

4. Dispositif selon une des revendications précédentes, caractérisé en ce que la zone avant (4) du trou débouchant (3) pourvue du taraudage (5) présente un diamètre (f) inférieur à celui de la zone arrière (6), et en ce que le manchon (8) présente un diamètre intérieur (h) qui est supérieur ou égal au diamètre (f) de la zone avant (4) du trou débouchant (3).

5. Dispositif selon une des revendications précédentes, caractérisé en ce que le corps de cheville (2) et le manchon d'expansion (8) sont en métal.
